# EUROPEAN PATENT SPECIFICATION

(11) **EP 3 796 548 B1**
(45) Date of publication and mention of the grant of the patent: **09.04.2025**
(21) Application number: 19803765.7
(22) Date of filing: 09.05.2019
(51) Int. Cl.: G05B 19/042, H02P 29/00, H02P 31/00

(54) **MOTOR CONTROL DEVICE AND SETTING DEVICE**
MOTORSTEUERVORRICHTUNG UND EINSTELLVORRICHTUNG
DISPOSITIF DE COMMANDE DE MOTEUR ET DISPOSITIF DE RÉGLAGE

(30) Priority: 14.05.2018 JP 2018093357
(43) Date of publication of application: 24.03.2021
(73) Proprietor: OMRON CORPORATION, Kyoto-shi, Kyoto 600-8530 (JP)
(72) Inventor: KIRIBUCHI, Takeshi, Kizugawa-shi, Kyoto 619-0283 (JP)
(74) Representative: Becker, Eberhard
(86) International application number: PCT/JP2019/018495
(87) International publication number: WO 2019/220993

(56) References cited:
- EP-A1- 3 082 251
- EP-A1- 3 217 279
- WO-A1-2015/087540
- JP-A- 2000 330 641
- JP-A- 2000 330 641
- JP-A- 2001 117 613

## Description

### BACKGROUND

### Technical Field

An aspect of the invention relates to a motor control device for controlling a motor.

### Description of Related Art

In industrial systems, such as factory automation (FA) systems, various proposals have been made for setting the operation conditions among the respective machines. For example, Japanese Laid-Open No. 2017-69777discloses a technology for changing the communication system of a communication processing device in correspondence with a command of a higher-level device. EP 3082251 A1 discloses a motor-driving apparatus, which drives a motor while controlling the motor based on an external command signal from an external device, includes an external command processor, a program storage, a motor controller, a program rewriting unit, a rewriting data input terminal. EP 3217279 A1 discloses a module system including a plurality of modules communicating with each other. The module system may include a master module configured to communicate with an external device, and at least one sub-module connected to a network to perform a data communication with the master module. The master module may transmit update data to a target sub-module requiring updating of data associated with an operation of the target sub-module among the at least one sub-module, via the network.

### SUMMARY

### [Problems to be Solved by the Invention]

The objective of an aspect of the invention is to conveniently change a communication system for communicating with a master device in a motor control device.

### [Means for Solving the Problems]

The present invention is provided by the appended claims. The following disclosure serves a better understanding of the present invention. To solve the above issue, a motor control device according to an aspect of the disclosure is a motor control device for controlling a motor. The motor control device includes a network communication unit, communicating with a master device, which is a higher-level device with respect to the motor control device, via a communication network; and a setting communication unit, receiving communication system information in the network communication unit by using a communication path different from the communication network. The network communication unit includes a reconfigurable device, and is able to change a communication system by reconfiguring the reconfigurable device. In a case where the setting communication unit receives the communication system information, the motor control device reconfigures the reconfigurable device in correspondence with the communication system information.

In addition, a setting device according to an aspect of the disclosure is a setting device for setting an operation condition of a motor control device. A network communication unit communicating with a master device, which is a higher-level device with respect to the motor control device, via a communication network is disposed in the motor control device. The network communication unit includes a reconfigurable device, and a communication system of the network communication unit is able to change by reconfiguring the reconfigurable device. The setting device includes a setting unit that sets communication system information in the network communication unit and supplies the communication system information to the motor control device by using a communication path different from the communication network.

### [Inventive Effects]

According to an aspect of the disclosure, the communication system for communicating with a master device can be changed conveniently in the motor control device.

### BRIEF DESCRIPTION OF THE DRAWINGS

FIG. 1 is a diagram illustrating a configuration of main parts of an FA system and a setting device according to non-claimed Embodiment 1.
FIG. 2 is a functional block diagram schematically illustrating the whole configuration of the FA system of FIG. 1.
FIG. 3 is a diagram illustrating an example of a circuit configuration of a power to a motor in a slave device of FIG. 1.
FIG. 4 is a diagram illustrating a configuration of main parts of an FA system and a setting device according to a non-claimed modified example of Embodiment 1.
FIG. 5 is a diagram illustrating a configuration of main parts of an FA system and a setting device according to Embodiment 2.

### DESCRIPTION OF THE EMBODIMENTS

### [Non-claimed embodiment 1]

In the following, an embodiment (referred to as "the embodiment" in the following) according to an aspect of the invention is described based on the drawings.

### §1 Applicable Example

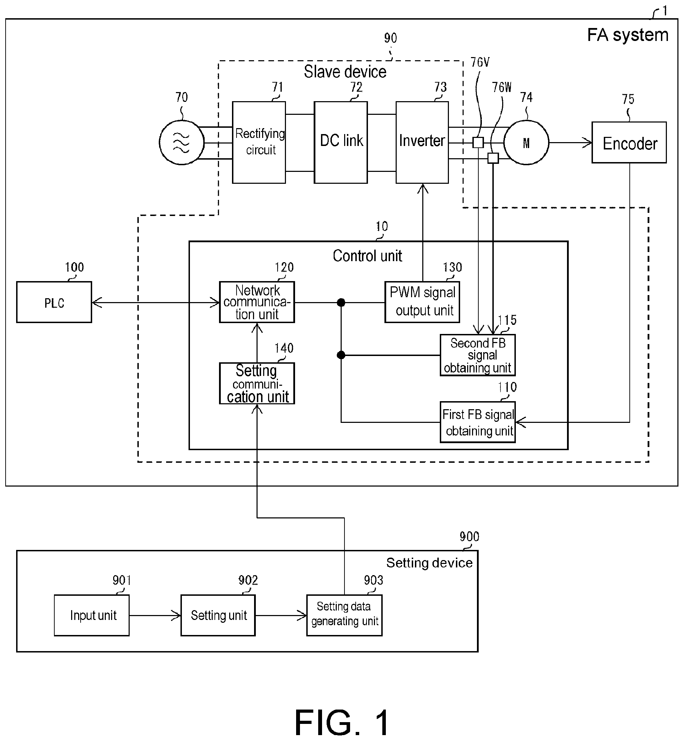

FIG. 1 is a diagram illustrating a configuration of main parts of an FA system (motor control system) 1 and a setting device 900 according to the embodiment (referred to as "Embodiment 1" in the following). The FA system 1 includes a slave device (motor control device) 90 and a programmable logic controller (PLC) (master device) 100. The PLC 100 is an example of a higher-level device (master device) with respect to the slave device 90.

The FA system 1 further includes a power 70 and a motor 74. The slave device 90 includes a control unit 10 that controls the motor 74. The control unit 10 includes a network communication unit 120 that communicates with the PLC 100 via a communication network (e.g., the communication network of the FA system 1). The network communication unit 120 includes a reconfigurable device. The slave device 90 can change the communication system of the network communication unit 120 by reconfiguring the reconfigurable device.

The setting device 900 sets the operation condition of the slave device 90. With the setting device 900 setting an operation of the user (referred to as "user operation" in the following), the user can set the operation condition of the slave device 90. Specifically, the setting device 900 sets the communication system of the network communication unit 120.

The setting device 900 includes an input unit 901, a setting unit 902, and a setting data generating unit (generating unit) 903. The input unit 901 receives the user operation. The setting unit 902 sets one communication system from a plurality of communication systems of the network communication unit 120 based on the user operation.

The control unit 10 further includes a setting communication unit 140. The setting communication unit 140 receives communication system information in the network communication unit 120 by using a communication path different from the communication network. As an example, the setting communication unit 140 obtains the communication system information from the setting device 900. The slave device 90 (more specifically, the control unit 10) reconfigures the reconfigurable device in correspondence with the communication system information in the case where the setting communication unit 140 receives the communication system information. For example, the setting communication unit 140 reconfigures the reconfigurable device in correspondence with the received communication system information. However, in the control unit 10, the function of reconfiguring the reconfigurable device may also be assigned to a functional unit different from the setting communication unit 140.

According to the configuration, the suitable communication system of the slave device 90 can be arbitrarily changed in correspondence with the specification of the PLC 100. That is, different from the conventional art, preparation of a slave device 90 in which a predetermined communication system is set in advance in correspondence with the specification of the PLC 100 is not required. Therefore, one slave device 90 can be set so as to be able to communication with the PLCs 100 of various specifications.

In addition, the setting communication unit 140 obtains the communication system information by using a communication path different from the communication network. Therefore, for example, the slave device 90 can obtain the communication system information from the setting device 900 by using the different communication path. As an example, the slave device 90 can communicate with the setting device by using a wired or wireless communication path not included in the communication network. Therefore, the connection relation between the setting device 900 and the slave device 90 can be easily changed. Therefore, in a field (e.g., in a factory) in which the slave device 90 is disposed, the user can conveniently carry out the setting of the slave device 90 on the spot. Therefore, according to the slave device 90, the communication system for communication with the PLC 100 can be changed conveniently.

### §2 Configuration Example

### (Outline of FA System 1)

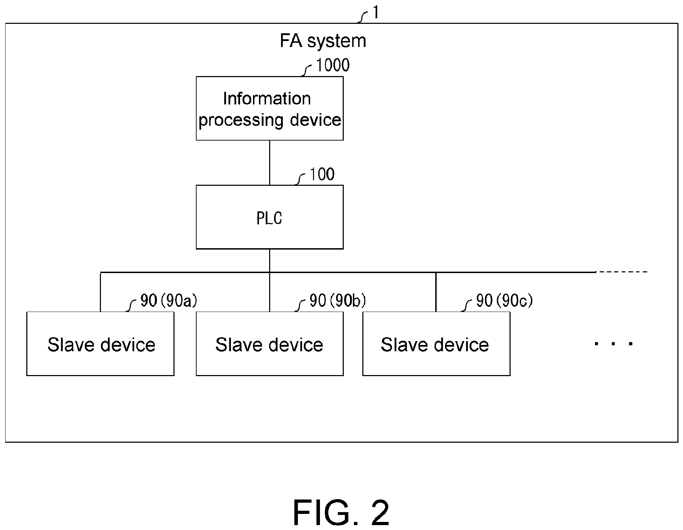

FIG. 2 is a functional block diagram schematically illustrating the whole configuration of the FA system 1. The FA system 1 includes an information processing device 1000, the PLC 100, and the slave device 90. The FA system 1 is a unit in which a production facility including a plurality of machines disposed in a factory is put together for each function. The FA system 1 is a system for realizing automation of manufacturing processes in a factory. The FA system 1 is realized by a master-slave control system.

In the FA system 1, the PLC (master device) 100 may also be referred to as a network master. Correspondingly, the slave device 90 may also be referred to as a network slave. The PLC 100 controls one or more slave devices 90.

The information processing device 1000 comprehensively controls the respective units of the FA system 1. The information processing device 1000 may control the PLC 100. The PLC 100 can output data to the respective slave devices 90. In addition, the PLC 100 can obtain data of the respective slave devices 90. An industrial PC platform (IPC) may be used as the information processing device 1000 or the PLC 100.

The slave devices 90 are respectively connected with the information processing device 1000 via the PLC 100. The slave device 90 executes one or more functions relating to the manufacturing processes in accordance with the command of the PLC 100. For the ease of description, the three slave devices 90 shown in FIG. 2 are respectively referred to as slave devices 90a to 90c. The information processing device 1000 may control the slave devices 90a to 90c via the PLC 100. The slave devices 90a to 90c carry out communication via the PLC 100. While FIG. 2 illustrates a case where there are multiple slave devices 90, there may also be one (single) slave device 90.

### (Example of Circuit Configuration)

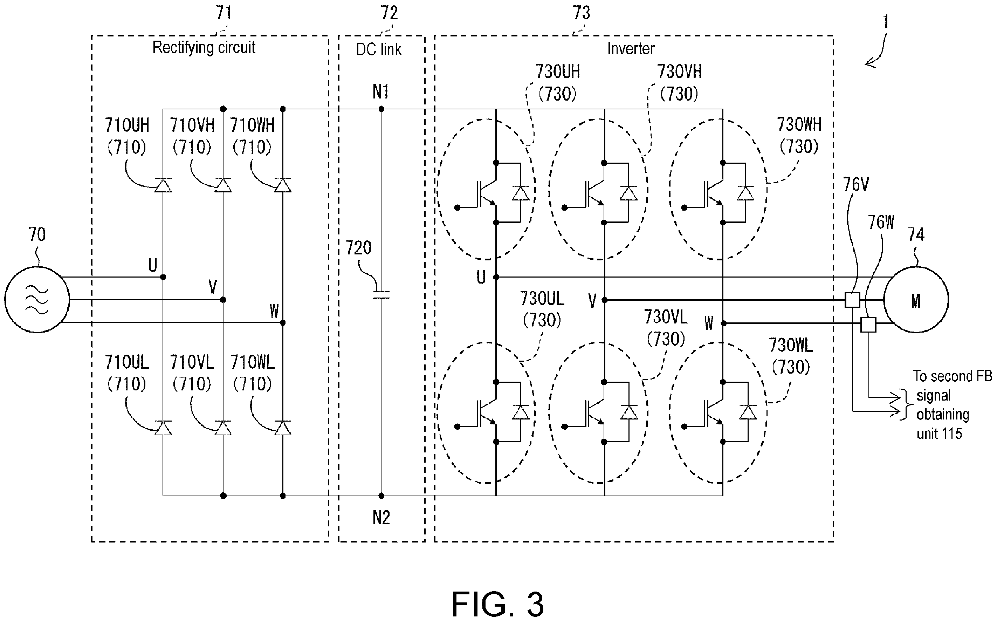

FIG. 3 is a diagram illustrating an example of a circuit configuration of a power 70 to a motor 74 in the FA system 1. The slave device 90 includes a rectifying circuit 71, a direct current (DC) link 72, and an inverter (power conversion unit) 73. The control unit 10 outputs a motor driving signal (e.g., a pulse width modulation (PWM) signal) for the inverter 73 to drive the motor 74 to the inverter 73. The inverter 73 drives the motor 74 based on the PWM signal. Accordingly, the control unit 10 controls (drives) the motor 74 via the inverter 73.

In the following, a case where the motor 74 is a three-phase alternative current (AC) induction motor (IM) is described. However, the motor 74 may also be a three-phase AC synchronous motor (SM). Alternatively, the motor 74 may also be a single-phase or two-phase AC motor. In addition, as the motor 74, a DC motor can also be used.

The power 70 is a conventional three-phase AC power. In the following, the respective phases of the three-phase AC are represented as the U-phase, the V-phase, and the W-phase. The power 70 is connected to the rectifying circuit 71. The rectifying circuit 71 has six rectifying elements 710. As an example, the rectifying element 710 is a diode. The rectifying circuit 71 converts an AC voltage into a DC voltage (DC power) by rectifying the AC voltage (AC power) supplied from the power 70. The rectifying circuit 71 serves as an AC/DC converter.

The six rectifying elements 710 form a three-phase full-wave rectifying circuit. Among the six rectifying elements 710, (i) two of the rectifying elements 710 are connected to the U-phase of the power 70, (ii) two of the rectifying elements 710 are connected to the V-phase of the power 70, and (iii) two of the rectifying elements 710 are connected to the W-phase of the power 70.

In FIG. 3, the six rectifying elements 710 are respectively referred to as the following:
a rectifying element 710UH (U-phase upper arm rectifying element);
a rectifying element 710UL (U-phase lower arm rectifying element);
a rectifying element 710VH (V-phase upper arm rectifying element);
a rectifying element 710VL (V-phase lower arm rectifying element);
a rectifying element 710WH (W-phase upper arm rectifying element); and
a rectifying element 710WL (W-phase lower arm rectifying element)

Also, a "upper arm rectifying element" generally refers to the rectifying element 710 connected to a node N1 of the DC link 72 (a capacitor 720). Besides, a "lower arm rectifying element" generally refers to the rectifying element 710 connected to a node N2 of the DC link 72. The implication of "upper arm" and "lower arm" is the same as the inverter 73 described in the following.

The rectifying circuit 71 is connected with the inverter 73 via the DC link 72. The DC link 72 includes the capacitor 720. One of the two nodes of the capacitor 720 is referred to as N1, while the other is referred to as N2. The capacitor 720 smooths the DC voltage supplied from the rectifying circuit 71. In the circuit configuration of FIG. 3, (i) the node N1 is equivalent to the positive electrode of the capacitor 720, and (ii) the node N2 is equivalent to the negative electrode of the capacitor 720. The DC link 72 may also be referred to as a smoothing circuit.

The inverter 73 has six switching elements 730. In Embodiment 1, the case where the inverter 73 is a voltage-type inverter is described. However, a current-type inverter may also be used as the inverter 73. The inverter 73 converts the DC voltage into the AC voltage (AC power) by switching the DC voltage (DC power) supplied from the DC link. The inverter 73 serves as a DC/AC converter.

The switching element 730 is formed by connecting an insulated gate bipolar transistor (IGBT) and a diode (reflux diode) in parallel. Among the six switching elements 730, (i) two of the switching elements 730 are connected to the U-phase of the motor 74, (ii) two of the switching elements 730 are connected to the V-phase of the motor 74, and (iii) two of the switching elements 730 are connected to the W-phase of the motor 74. More specifically, "U-phase of the motor 74" refers to "U-phase of a stator coil of the motor 74". The same applies to the V-phase and the W-phase.

In FIG. 3, the six switching elements 730 are respectively referred to as the following:
a switching element 730UH (U-phase upper arm switching element);
a switching element 730UL (U-phase low arm switching element);
a switching element 730VH (V-phase upper arm switching element);
a switching element 730VL (V-phase lower arm switching element);
a switching element 730WH (W-phase upper arm switching element); and
a switching element 730WL (W-phase lower arm switching element)

The inverter 73 supplies the converted voltage (AC voltage) to the motor 74. By disposing the inverter 73, a three-phase AC voltage with a desired waveform (e.g., a three-phase AC voltage having a desired frequency and a desired amplitude) can be supplied to the motor 74. Accordingly, the operation of the motor 74 can be controlled by respectively controlling the operation of the inverter 73 (ON/OFF of the six switching elements 730). That is, the motor 74 can be driven according to a desired operation condition. In Embodiment 1, the motor 74 is driven under PWM control.

### (Example of Control Method of Motor 74)

An example of the control method of the motor 74 is described with reference to FIG. 1. The control unit 10 further includes a first feedback signal obtaining unit (first FB signal obtaining unit, feedback signal obtaining unit) 110, a second feedback signal obtaining unit (second FB signal obtaining unit, feedback signal obtaining unit) 115, and a PWM signal output unit (motor driving signal output unit) 130. The first FB signal obtaining unit 110 and the second FB signal obtaining unit 115 are generally referred to as the feedback signal obtaining unit (FB signal obtaining unit). In other words, in Embodiment 1, the FB signal obtaining unit is exemplified as including the first FB signal obtaining unit 110 and the second FB signal obtaining unit 115. The FB signal obtaining unit obtains a feedback signal (FB signal) indicating a predetermined physical quantity corresponding to an operation state of the motor 74. The PWM signal output unit 130 outputs a PWM signal (motor driving signal) to the inverter 73.

In Embodiment 1, the FB signal obtaining unit is exemplified as including the first FB signal obtaining unit 110 and the second FB signal obtaining unit 115. That is, in Embodiment 1, the case where the first FB signal obtaining unit 110 and the second FB signal obtaining unit 115 are used to perform feedback control of the motor 74 is described. Therefore, the FB signal includes the first FB signal and the second FB signal to be described afterwards. However, the FB signal obtaining unit may also be configured as including only one of the first FB signal obtaining unit 110 and the second FB signal obtaining unit 115. That is, the FB signal may also be only one of the first FB signal and the second FB signal.

The FA system 1 further includes an encoder 75 (position detection unit) that detects the position of the rotor of the motor 74. The encoder 75 is disposed in (e.g., attached to) the motor 74. The encoder 75 is, for example, a rotary encoder. The encoder 75 detects the position of the rotor of the motor 74 (more specifically, the rotation angle of the motor 74, which is referred to as θm in the following). More specifically, "rotation angle of the motor 74" refers to "rotation angle of the rotor of the motor 74". θm is an example of the predetermined physical quantity corresponding to the operation state of the motor 74. The encoder 75 outputs a signal indicating θm (referred to as "angle detection signal" in the following). The angle detection signal is, for example, a serial data signal (digital data). Accordingly, the encoder 75 outputs the angle detection signal as a signal representing numerical data.

The first FB signal obtaining unit 110 obtains the angle detection signal, as the first feedback signal (first FB signal), from the encoder 75. Specifically, the first FB signal obtaining unit 110 obtains the first FB signal (angle detection signal) from the encoder 75 every predetermined period (communication period). The first FB signal obtaining unit 110 is used for position feedback, for example.

The first FB signal obtaining unit 110 performs communication (data reception) with the encoder 75 according to a conventional communication system (first communication system). Examples of the first communication system include RS422 or RS485. It suffices as long as the first communication system is a conventional serial communication system. In the configuration, the first FB signal obtaining unit 110 performs a digital process for obtaining the first FB signal.

The FA system 1 further includes current detectors 76V and 76W. The second FB signal obtaining unit 115 obtains a signal (referred to as current detection signal in the following) that indicates the current supplied from the inverter 73 to the motor 74 via the current detectors 76V and 76W. The current is another example of the predetermined physical quantity corresponding to the operation state of the motor 74. For example, the second FB signal obtaining unit 115 detects the current supplied from the inverter 73 to two predetermined phases (e.g., V-phase and W-phase) of the motor 74 via the current detectors 76V and 76W (see FIGs. 1 and 3).

As an example, the current detectors 76V and 76W may be the conventional analog current detectors. The current detector 76V detects the current supplied from the inverter 73 to the V-phase of the motor 74. The current detector 76W detects the current supplied from the inverter 73 to the W-phase of the motor 74. The current detectors 76V and 76W output their detection results as current detection signals. In this case, the current detection signals are analog signals (analog data).

As an example, the second FB signal obtaining unit 115 is formed by a delta-sigma type analog-digital (AD) converter. The second FB signal obtaining unit 115 converts the current detection signal, which is an analog signal and obtained from the current detectors 76V and 76W, into digital signals (digital data). The second FB signal obtaining unit 115 obtains the converted current detection signal as the second feedback signal (second FB signal) that corresponds to the torque value of the motor 74. However, the second FB signal obtaining unit 115 may also be configured by a conventional AD converter which does not adopt the delta-sigma type.

As another example, the current detectors 76V and 76W may also be conventional digital-type current detectors. In this case, the current detection signal is, for example, a serial data signal (digital data). In this case, the second FB signal obtaining unit 115 obtains the current detection signal, as the second FB signals, from the current detectors 76V and 76W. The second FB signal obtaining unit 115 performs communication (data reception) with the current detectors 76V and 76W according to a conventional serial communication system. Accordingly, the second FB signal may also be supplied to the second FB signal obtaining unit 115 via serial communication. In this case, the second FB signal obtaining unit 115 does not require the AD converting function. Therefore, the configuration of the second FB signal obtaining unit can be simplified.

The first FB signal obtaining unit 110 is connected to the network communication unit 120 and the PWM signal output unit 130. The first FB signal obtaining unit 110 can supply the first FB signal to at least one of the network communication unit 120 and the PWM signal output unit 130. Similarly, the second FB signal obtaining unit 115 is connected to the network communication unit 120 and the PWM signal output unit 130. The second FB signal obtaining unit 115 can supply the second FB signal to at least one of the network communication unit 120 and the PWM signal output unit 130. Accordingly, the FB signal obtaining unit can supply the FB signal to at least one of the network communication unit 120 and the PWM signal output unit 130.

The network communication unit 120 is a communication interface between the control unit (the slave device 90) and the PLC 100 (master device). The network communication unit 120 performs communication (data transmission and reception) with the PLC 100 according to a second communication system different from the first communication system. Examples of the second communication system include EtherCAT (Etherent (registered trademark) for Control Automation Technology) (registered trademark) or MECHAROLINK (registered trademark). It suffices as long as the second communication system is a conventional communication system based on the field network.

As described above, the slave device 90 can change the second communication system (the communication system with which the network communication unit 120 obtains data from the PLC 100) by reconfiguring the reconfigurable device included in the network communication unit 120. As an example, the network communication unit 120 includes a programmable logic device (PLD), as the reconfigurable device, able to change the circuit configuration (able to rewrite the circuit configuration). The slave device 90 can change the second communication system by changing the PLD circuit configuration. The change of the PLD circuit configuration is an example of the reconfiguration of each reconfigurable device. Examples of the PLD include field programmable gate arrays (FPGAs). In Embodiment 1, the case where the network communication unit 120 is configured by using an FPGA is described. However, the reconfigurable device applicable for the network communication unit 120 is not limited to FPGA. For example, the network communication unit 120 may also be configured by using a dynamically reconfigurable processor (DRP).

The PLC 100 generates one or more command signals with respect to the motor 74 (e.g., calculates one or more command values with respect to the motor 74) based on the operation condition of the motor 74 set by the user. As an example, the PLC 100 generates a first command value (e.g., the command value relating to the rotation angle of the motor 74) and a second command value(the command value relating to the current supplied to the motor 74). The PLC 100 uses θm indicated by the first FB signal as the feedback value (first FB value) with respect to the first command value. In addition, the PLC 100 uses the current value indicated by the second FB signal as the feedback value (first FB value) with respect to the second command value.

As an example, the control unit 10 is provided with an FB calculation processing (feedback calculation processing) function. In this case, the control unit 10 obtains the respective command values (first command value and second command value) from the PLC 100 via the network communication unit 120. Then, the control unit 10 performs a control process on the motor 74 (motor control process) based on the comparison results between the respective command values and the respective FB values (e.g., the differences between the respective command values and the respective FB values). That is, the control unit 10 performs an FB calculation process for controlling the motor 74 based on the comparison results. Accordingly, the control unit 10 can perform a motor control process (FB calculation process) based on the respective FB signals. As an example, in Embodiment 1, the control unit 10 supplies the result of the FB calculation process (referred to as "FB calculation process result" in the following) to the PWM signal output unit 130. The PWM signal output unit 130 generates the PWM signal (motor driving signal) based on the FB calculation process result.

The PWM signal is a signal that controls ON/OFF of the respective six switching elements 730 of the inverter 73. The PWM signal can be understood as a signal for driving the motor 74 via the inverter 73. Accordingly, the PWM signal is an example of the motor driving signal (a signal that makes the inverter 73 drive the motor 74). As an example, the PWM signal output unit 130 adjusts a duty ratio (also referred to as "duty cycle") based on the FB calculation process result.

Different from the example above, the FB calculation process may also be performed in the PLC 100. That is, the PLC 100 carries out the substantial motor control. In this case, the network communication unit 120 may supply the first FB signal obtained from the first FB signal obtaining unit 110 to the PLC 100. Also, the network communication unit 120 may supply the second FB signal obtained from the second FB signal obtaining unit 115 to the PLC 100. Furthermore, the network communication unit 120 obtains the FB calculation process result from the PLC 100.

### (Modified Example of Second Communication System Using Setting Device 900)

In the communication using the field network, the format of the data output from the PLC 100 differs as the specification of the PLC 100 differs. Therefore, the type of the communication system (second communication system) for the the network communication unit 120 to obtain data from the PLC 100 differs as the specification of the PLC 100 differs.

As an example, the case where the manufacturer of a PLC (referred to as "type-A PLC" for the ease of description) is different from the manufacturer of another PLC (referred to as "type-B PLC" for the ease of description) is considered. In such scenario, (i) the communication system for the network communication unit 120 to obtain data from the type-A PLC (referred to as the second communication system of the type A in the following) is different from (ii) the communication system for the network communication unit 120 to obtain data from the type-B PLC (referred to as the second communication system of the type B in the following). As an example, while the second communication system of the type A and the second communication system of the type B are communication systems based on the field network, the communication protocols thereof are different.

Conventionally it is necessary to prepare a motor control device in which a specific communication system is set in advance in correspondence with the specification of the PLC. For example, in the case where the type-A PLC and the motor control device are used together, it is necessary to prepare a motor control device having a network communication unit (referred to as "type-A network communication unit" in the following) with which communication is possible by using the second communication system of the type A. Meanwhile, in the case where the type-B PLC and the motor control device are used together, it is necessary to prepare a motor control device having a network communication unit (referred to as "type-B network communication unit" in the following) with which communication is possible by using the second communication system of the type B. Thus, conventionally, to cope with PLCs with different specifications, it is necessary to prepare multiple motor control devices. As a result, the issue that the inventory management of the motor control device becomes complicated arises.

In addition, conventionally, to cope with the PLCs with different specifications by using one motor control device, the motor control device needs to be provided with multiple network communication units. As an example, the case where the type-A PLC and the type-B PLC are coped with by using one motor control device is considered. In this case, it is necessary to provide two communication units, i.e., a type-A network communication unit and a type-B network communication unit, in one motor control device. Accordingly, in the case where the PLCs with different specifications are coped with by using one motor control device, the issue that the configuration of the motor control device becomes complicated arises.

Given the above issues, the inventors of the invention (referred to as "inventors" in the following) consider there is still room for improvement in the configuration of improving the convenience of the motor control device. The configurations of the setting device 900 and the slave device 90 according to Embodiment 1 is an example of a concept newly devised by the inventors.

As an example, the setting device 900 stores a program (referred to as "setting program" in the following) in which the user sets the operation condition of the slave device 90. The setting unit 902 and the setting data generating unit 903 are realized by executing the setting program by using the setting device 900. The setting device 900 is, for example, a portable information processing device. As an example, the setting device 900 is a notebook personal computer (PC). Alternatively, a tablet terminal may also be used as the setting device 900. By using a portable information processing device as the setting device 900, the user can conveniently change the setting of the slave device 90 in the field. Nevertheless, the setting device 900 may also be a stationary information processing device.

As described above, the setting device 900 can communicate with the slave device 90 (the setting communication unit 140) with a communication path different from the communication network. In Embodiment 1, a case in which a universal serial bus (USB, registered trademark) cable is used to form a wired communication path between the setting device 900 and the slave device 90 is described. By disposing a USB port for the USB cable to insert in the slave device 90, the configuration can be adopted. Nevertheless, the wired communication path may also be formed by using a conventional wired communication technology other than USB.

Alternatively, a wireless communication path may also be formed between the setting device 900 and the slave device 90 by using a conventional wireless communication technology, for example. By providing the slave device 90 with a wireless communication function capable of wireless communication with the setting device 900, the configuration can be adopted. As an example, the wireless communication path can be formed by using Bluetooth (registered trademark).

During execution of the setting program, the setting device 900 may display the candidates of the plurality of the second communication systems on a display unit (not shown). That is, the setting device 900 presents an operation screen for the user to choose one communication system among the second communication systems. The user refers to the operation screen and performs a user operation that chooses one communication system from the plurality of the second communication systems on the input unit 901.

The setting unit 902 sets one communication system from the plurality of the second communication systems based on the user operation. For example, in the case where the user chooses the second communication system of the type A on the operation screen, the setting unit 902 sets the second communication system of the type A from the plurality of second communication systems according to the user's choice. Meanwhile, in the case where the user chooses the second communication system of the type B on the operation screen, the setting unit 902 sets the second communication system of the type B from the plurality of second communication systems according to the user's choice.

The setting data generating unit 903 generates the setting data of the PLD circuit configuration. The setting data of the PLD circuit configuration is an example of the setting data of the reconfigurable device. Specifically, the data setting generating unit 903 generates the setting data in correspondence with the type of the second communication system set by the setting unit 902. In addition, the setting data generating unit 903 supplies the generated setting data to the setting communication unit 140. The setting data is an example of the communication system information. The setting communication unit 140 can change the PLD circuit configuration in correspondence with the communication system information.

As an example, in the case where the second communication system of the type A is set, the setting data generating unit 903 generates the setting data (referred to as "type-A setting data" in the following), so that communication is possible by using the second communication system of the type A in the network communication unit 120. In addition, the setting data generating unit 903 supplies the type-A setting data to the setting communication unit 140 via the USB cable. The setting communication unit 140 supplies the type-A setting data to the network communication unit 120. In addition, the setting communication unit 140 changes the PLD circuit configuration by using the type-A setting data. As a result, in the network communication unit 120, communication is possible by using the second communication system of the type A.

Meanwhile, in the case where the second communication system of the type B is set as the second communication system, the setting data generating unit 903 generates the setting data (referred to as "type-B setting data" in the following), so that communication is possible by using the second communication system of the type B in the network communication unit 120. In addition, the setting data generating unit 903 supplies the type-B setting data to the setting communication unit 140 via the USB cable. The setting communication unit 140 supplies the type-B setting data to the network communication unit 120. In addition, the setting communication unit 140 changes the PLD circuit configuration by using the type-B setting data. As a result, in the network communication unit 120, communication is possible by using the second communication system of the type B.

Accordingly, according to the setting device 900, the network communication unit 120 can be provided with the function of one of the type-A network communication unit and the type-B network communication unit in correspondence with the specification of the PLC 100. That is, without disposing an additional network communication unit, one slave device 90 can still communicate with the PLCs 100 of various specifications. In other words, the protocol of the second communication system can be changed in the network communication unit 120. Consequently, different from the conventional art, the complication level of the inventory management of the slave device 90 can be reduced. In addition, a complicated structure of the slave device 90 can be avoided. Therefore, according to the configuration of Embodiment 1, the convenience of the slave device 90 can be improved over the conventional art.

Moreover, the setting device 900 can communicate with the slave device 90 through a communication path (e.g., USB cable) different from the communication network. That is, the connection relation between the setting device 900 and the slave device 90 can be easily changed without changing the setting of the communication network. Therefore, the setting device 900 can be connected with the slave device 90 without a complicated operation performed by the user. Therefore, in the field in which the slave device 90 is disposed, the user can conveniently set the slave device 90 on the spot.

In particular, since the setting data can be generated by the setting data generating unit 903, a complicated circuit configuration change of the PLD can be dealt with in Embodiment 1. Therefore, the user can be provided with more diverse options regarding the types of the second communication method that can be set. Moreover, since the setting data can be directly supplied from the setting device 900 to the slave device 90 via the USB cable, the user operation can be simplified.

### [Modified non-claimed Example]

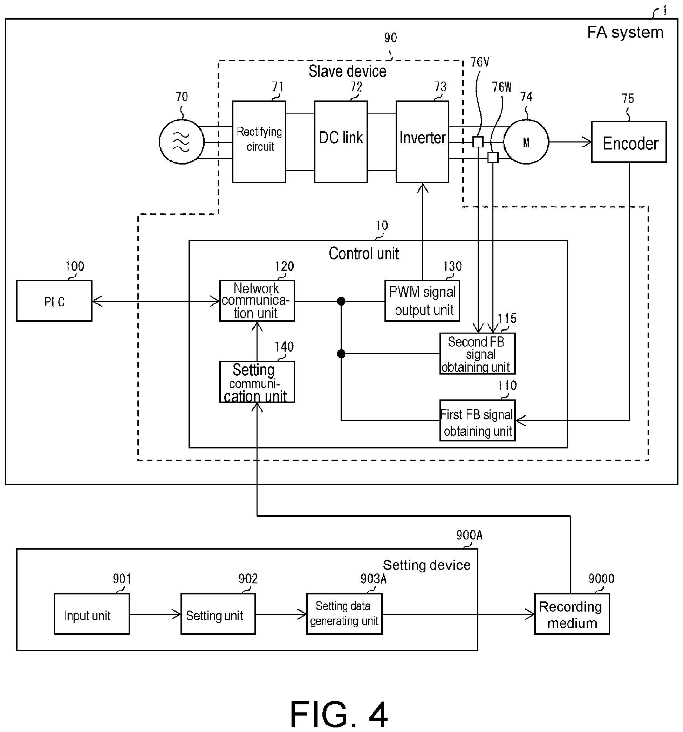

FIG. 4 is a diagram illustrating a configuration of main parts of the FA system 1 and a setting device 900A. The setting device 900A is a modified example of the setting device 900 of Embodiment 1. The setting data generating unit of the setting device 900A is referred to as a setting data generating unit (generating unit) 903A. Different from the setting data generating unit 903, the setting data generating unit 903A further includes a function of generating the setting data generated by itself to a recording medium 9000. That is, the setting data generating unit 903A can write the setting data to the recording medium 9000.

The recording medium 9000 is any recording medium readable by the slave device 90. As an example, the recording medium 9000 is a removable medium that is removable with respect to the setting device 900A and the slave device 90. Examples of the removable medium include a USB memory or a SD memory card. As an example, the case in which a USB memory is used as the recording medium 9000 is described.

The user inserts the recording medium 9000 into the USB port disposed on the setting device 900A. The setting data generating unit 903A writes the setting data to the recording medium 900 when the recording medium 9000 is inserted into the USB port of the setting device 900A. When the writing of the data is finished, the user removes the recording medium 9000 from the USB port of the setting device 900A.

Then, the user inserts the recording medium 9000 into the USB port disposed on the slave device 90. The setting communication unit 140 reads the setting data stored in the recording medium 9000 when the recording medium 9000 is inserted into the USB port of the slave device 90. The network communication unit 120 uses the setting data to change the PLD circuit configuration.

Accordingly, the setting communication unit 140 may also receive the communication system information by reading the information recorded in the recording medium 9000. Therefore, it is not required to prepare the setting device 900A at the time of changing the circuit configuration of each PLD.

### [Embodiment 2]

Embodiment 2 is described in the following. For the ease of descriptions, components having the same functions as those described in Embodiment 1 are labeled with the same symbols and the descriptions thereof will not be repeated in the following. The FA system of Embodiment 2 is referred to as an FA system 2. In addition, the setting device of Embodiment 2 is referred to as a setting device 900B.

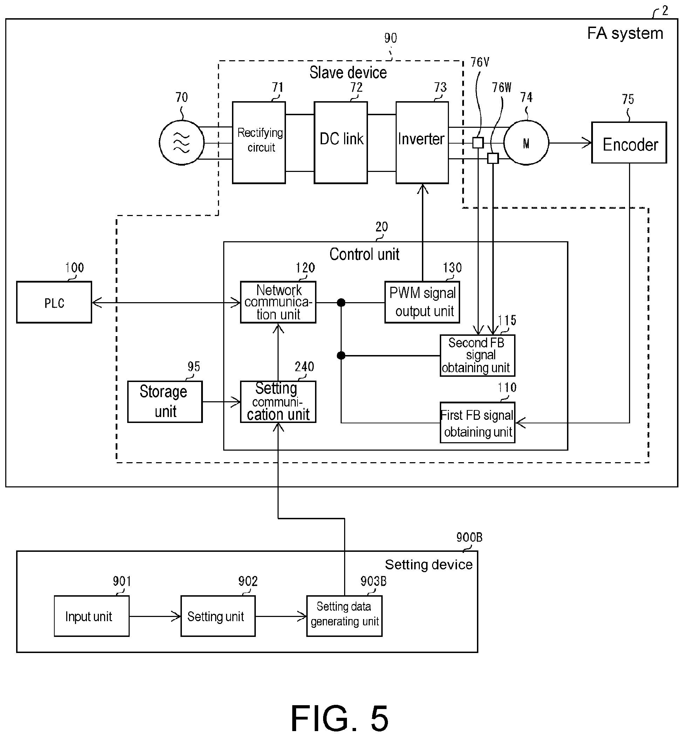

FIG. 5 is a diagram illustrating a configuration of main parts of the FA system 2 and the setting device 900B. The control unit of the slave device 90 of the FA system 2 is referred to as a control unit 20. In addition, the setting communication unit of the control unit 20 is referred to as a setting communication unit 240.

Different from Embodiment 1, the setting data of the PLD circuit configuration is kept in advance in the slave device 90. The slave device 90 further includes a storage unit 95. The type-A setting data and the type-B setting data are stored in advance in the storage unit 95.

The setting device 900B has a configuration in which a command unit 903B replaces the setting data generating unit 903 in the setting device 900 of Embodiment 1. The command unit 903B provides the setting communication unit 240 with a command (referred to as "setting command" in the following) that sets (changes) the PLD circuit configuration by using the setting data stored in the storage unit 95. In Embodiment 2, the setting command is an example of the communication system information. That is, the setting communication unit 240 receives the setting command as the communication system information.

For example, in the case where the second communication system of the type A is set as the second communication system, the command unit 903B provides the setting communication unit 240 with a command (referred to as "type-A setting command" in the following) of setting the PLD circuit configuration by using the type-A setting data. The setting communication unit 240 reads the type-A setting data from the storage unit 95 when receiving the type-A setting command. In addition, the setting communication unit 240 changes the PLD circuit configuration by using the type-A setting data. As a result, in the network communication unit 120, performing communication by using the second communication system of the type A is possible.

Meanwhile, in the case where the second communication system of the type B is set as the second communication system, the command unit 903B provides the setting communication unit 240 with a command (referred to as "type-B setting command" in the following) of setting the PLD circuit configuration by using the type-B setting data. The setting communication unit 240 reads the type-B setting data from the storage unit 95 when receiving the type-B setting command. In addition, the setting communication unit 240 changes the PLD circuit configuration by using the type-B setting data. As a result, in the network communication unit 120, performing communication by using the second communication system of the type B is possible.

The PLD circuit configuration can also be changed in correspondence with the second communication system set by the user according to the configuration of Embodiment 2. Therefore, the convenience of the slave device can be improved. In particular, different from Embodiment 1, since it is not necessary to generate the setting data by the setting device in Embodiment 2, the process of the setting device can be simplified.

### [Modified Example]

In the setting device according to an aspect of the invention, the communication system of the network communication unit may also be changed by using a conventional hardware switch. Specifically, the hardware switch may also be used as the communication path different from the communication network. As the hardware switch, a dual in-line package (DIP) switch can be used, for example. Like Embodiment 2, the setting data of the PLD circuit configuration is kept in advance in the storage unit of the motor control device.

As an example, when the user turns on a predetermined switch (e.g., a switch for the second communication system of the type A) in the DIP switch, the DIP switch may provide the network communication unit with the type-A setting command. In this case, the network communication unit can perform communication by using the second communication system of the type A. Meanwhile, when the user turns off the predetermined switch and turns on another switch (e.g., a switch for the second communication system of the type B) in the DIP switch, the DIP switch may provide the network communication unit with the type-B setting command. In this case, the network communication unit can perform communication by using the second communication system of the type B.

### [Example of Implementation by Software]

The control blocks (specifically the control units 10, 20, the setting unit 902, the setting data generating units 903, 903A, and the command unit 903B) of the FA systems 1, 2 and the setting devices 900, 900A, and 900B may be realized by logic circuits (hardware) formed by integrated circuits (IC chips), etc., or realized by software.

In the latter case, the FA systems 1, 2 and the setting devices 900, 900A, 900B include a computer for executing the command of a program which is the software for realizing the respective functions. The computer includes one or more processors, for example, as well as a computer readable recording medium storing the program. In addition, in the computer, with the processor reading the program from the recording medium and executing the program, the objective according to an aspect of the invention is achieved. As the processor, a central processing unit (CPU) can be used. As the recording medium, a "non-transitory tangible medium" such as a read-only memory (ROM), as well as a tape, a disk, a card, a semiconductor memory, a programmable logic circuit, or the like can be used. In addition, a random access memory (RAM), etc., that develops the program may also be further included. In addition, the program may also be supplied to the computer via any transmission medium (communication network, broadcast waves, etc.) capable of transmitting the program. An aspect of the invention may also be realized in the form of data signals embedded in a carrier wave, in which the program is realized through electronic transmission.

### [Appendix]

The aspect of the invention is not limited to the above-described embodiments, and various modifications can be made within the scope of the claims. The embodiments obtained by appropriately combining the technical means disclosed in the different embodiments are also included in the technical scope of the aspect of the invention.

### [Outline]

According to the above, an aspect of the invention is a motor control device for controlling a motor. The motor control device includes a network communication unit, communicating with a master device, which is a higher-level device with respect to the motor control device, via a communication network; and a setting communication unit, receiving communication system information in the network communication unit by using a communication path different from the communication network. The network communication unit includes a reconfigurable device, and is able to change a communication system by reconfiguring the reconfigurable device. In a case where the setting communication unit receives the communication system information, the motor control device reconfigures the reconfigurable device in correspondence with the communication system information.

According to the configuration, the suitable communication system of the motor control device can be arbitrarily changed in correspondence with the specification of the master device. That is, different from the conventional art, preparation of a motor control device in which a specific communication system is set in advance in correspondence with the specification of the master device is not required. Therefore, one motor control device can be set so as to be able to communicate with the master devices of various specifications.

In addition, the setting communication unit can receive the communication system information by using a communication path different from the communication network (e.g., the communication network in the FA system). For example, the setting communication unit can communicate with the setting device (the device that sets the operation condition of the motor control device) by using the different communication path. Therefore, the connection relation between the motor control device and the setting device can be easily changed. Therefore, in a field (e.g., in a factory) in which the motor control device is disposed, the user can conveniently carry out the setting of the motor control device on the spot. According to the above, in an aspect of the invention, the communication system for communicating with the master device can be changed conveniently in the motor control device. As a result, the convenience of the motor control device can be improved.

In addition, to solve the above issue, in the motor control device according to an aspect of the invention, the setting communication unit may receive, as the communication system information, setting data of the reconfigurable device, and the motor control device may reconfigure the reconfigurable device in correspondence with the setting data.

According to the configuration, the motor control device can reconfigure the reconfigurable device in correspondence with the setting data set in the setting device, for example. In particular, by generating the setting data in the setting device, a complicated reconfiguration can be handled. Therefore, the user can be provided with more diverse options regarding the types of the communication method that can be set. Moreover, since the setting data can be directly supplied from the setting device to the motor control device via a USB cable, the user operation can be simplified.

In addition, to solve the above issue, in the motor control device according to an aspect of the invention, the setting communication unit may receive the communication system information by reading information recorded in a recording medium.

According to the configuration, the motor control device can obtain the communication system information by reading and obtaining the information recorded in the recording medium. Therefore, it is not required to prepare the setting device at the time when the motor control device reconfigures the reconfigurable device.

In addition, to solve the above issue, setting data of the reconfigurable device may be kept in advance in the motor control device according to an aspect of the invention, and the setting communication unit may receive a command of using the setting data, as the communication system information, to reconfigure the reconfigurable device.

According to the configuration, the motor control device can reconfigure the reconfigurable device. In this case, since it is not necessary to generate the setting data in the setting device, the process of the setting device can be simplified.

In addition, to solve the above issue, a setting device according to an aspect of the invention is a setting device for setting an operation condition of a motor control device. A network communication unit communicating with a master device, which is a higher-level device with respect to the motor control device, via a communication network is disposed in the motor control device. The network communication unit includes a reconfigurable device, and a communication system of the network communication unit is able to change by reconfiguring the reconfigurable device. The setting device includes a setting unit that sets communication system information in the network communication unit and supplies the communication system information to the motor control device by using a communication path different from the communication network.

According to the configuration, the communication system for communicating with the master device can be changed conveniently in the motor control device.

### [Descriptions of Symbols]

74: Motor
90, 90a to 90c: Slave device (motor control device)
100: PLC (master device)
120: Network communication unit
140, 240: Setting communication unit
900, 900A, 900B: Setting device
902: Setting unit
9000: Recording medium

## Claims

1. A motor control device (90) configured for controlling a motor (74), the motor control device (90) comprising:
a network communication unit (120), configured to be suitable for communicating with a master device (100), which is a higher-level device with respect to the motor control device (90), via a communication network; and
a setting communication unit (140, 240), configured to be suitable for receiving communication system information from a setting device (900) other than the master device (100) by using a communication path different from the communication network,
wherein the network communication unit (120) comprises a reconfigurable device, and is configured to be suitable to be able to change a communication system by reconfiguring the reconfigurable device, and
in a case where the setting communication unit (140, 240) receives the communication system information, the motor control device (90) is configured to reconfigure the reconfigurable device in correspondence with the communication system information,
**characterized in that**
the motor control device (90) is further configured to store a first type setting data and a second type setting data of the reconfigurable device in advance, in a case where the setting communication unit (140, 240) receives a setting command from the setting device (900) as the communication system information, the setting communication unit (140, 240) is configured to read the first type setting data or the second type setting data according to the setting command and to reconfigure the reconfigurable device using the first type setting data or the second type setting data that is read out.

## Patentansprüche

1. Motorsteuervorrichtung (90), die konfiguriert ist, um einen Motor (74) zu steuern, wobei die Motorsteuervorrichtung (90) umfasst:
eine Netzwerk-Kommunikationseinheit (120), die konfiguriert ist, um zum Kommunizieren über ein Kommunikationsnetzwerk mit einer Master-Vorrichtung (100) geeignet zu sein, die eine Vorrichtung auf höherer Ebene in Bezug auf die Motorsteuervorrichtung (90) ist; und
eine Einstellungs-Kommunikationseinheit (140, 240), die konfiguriert ist, um zum Empfangen von Kommunikationssysteminformationen von einer Einstellungsvorrichtung (900) geeignet zu sein, die nicht die Master-Vorrichtung (100) ist, unter Verwendung eines Kommunikationspfads, der sich von dem Kommunikationsnetzwerk unterscheidet,
wobei die Netzwerk-Kommunikationseinheit (120) eine rekonfigurierbare Vorrichtung umfasst und konfiguriert ist, um geeignet zu sein, um ein Kommunikationssystem durch Rekonfigurieren der rekonfigurierbaren Vorrichtung ändern zu können, und
in einem Fall, in dem die Einstellungs-Kommunikationseinheit (140, 240) die Kommunikationssysteminformationen empfängt, die Motorsteuervorrichtung (90) konfiguriert ist, die rekonfigurierbare Vorrichtung in Übereinstimmung mit den Kommunikationssysteminformationen zu rekonfigurieren,
**dadurch gekennzeichnet, dass** die Motorsteuervorrichtung (90) ferner konfiguriert ist, um Einstellungsdaten eines ersten Typs und Einstellungsdaten eines zweiten Typs der rekonfigurierbaren Vorrichtung im Voraus zu speichern, in einem Fall, in dem die Einstellungskommunikationseinheit (140, 240) einen Einstellungsbefehl von der Einstellungsvorrichtung (900) als die Kommunikationssysteminformation empfängt, die Einstellungskommunikationseinheit (140, 240) konfiguriert ist, die Einstellungsdaten des ersten Typs oder die Einstellungsdaten des zweiten Typs gemäß dem Einstellungsbefehl zu lesen und die rekonfigurierbare Vorrichtung unter Verwendung der Einstellungsdaten des ersten Typs oder der Einstellungsdaten des zweiten Typs, die ausgelesen werden, zu rekonfigurieren.

## Revendications

1. Dispositif de commande de moteur (90) configuré pour commander un moteur (74), le dispositif de commande de moteur (90) comprenant :
une unité de communication de réseau (120), configurée pour être adaptée pour communiquer avec un dispositif maître (100), qui est un dispositif de niveau supérieur par rapport au dispositif de commande de moteur (90), via un réseau de communication ; et
une unité de communication de réglage (140, 240), configurée pour être adaptée pour recevoir des informations de système de communication depuis un dispositif de réglage (900) autre que le dispositif maître (100) à l'aide d'un trajet de communication différent du réseau de communication,
dans lequel l'unité de communication de réseau (120) comprend un dispositif reconfigurable, et est configurée pour être adaptée pour pouvoir changer un système de communication en reconfigurant le dispositif reconfigurable, et
dans un cas où l'unité de communication de réglage (140, 240) reçoit les informations de système de communication, le dispositif de commande de moteur (90) est configuré pour reconfigurer le dispositif reconfigurable en correspondance avec les informations de système de communication,
**caractérisé en ce que**
le dispositif de commande de moteur (90) est en outre configuré pour stocker à l'avance des données de réglage de premier type et des données de réglage de deuxième type du dispositif reconfigurable ; dans un cas où l'unité de communication de réglage (140, 240) reçoit une instruction de réglage depuis le dispositif de réglage (900) en tant que les informations de système de communication, l'unité de communication de réglage (140, 240) est configurée pour lire les données de réglage de premier type ou les données de réglage de deuxième type selon l'instruction de réglage et pour reconfigurer le dispositif reconfigurable à l'aide des données de réglage de premier type ou des données de réglage de deuxièmes types qui sont lues.
